# EUROPEAN PATENT SPECIFICATION

(11) **EP 4 177 406 B1**
(45) Date of publication and mention of the grant of the patent: **25.12.2024**
(21) Application number: 22205172.4
(22) Date of filing: 02.11.2022
(51) Int. Cl.: E02F 9/20

(54) **WORKING MACHINE AND METHOD OF CHANGING THE DRIVING DIRECTION OF SUCH WORKING MACHINE**
ARBEITSMASCHINE UND VERFAHREN ZUM ÄNDERN DER FAHRTRICHTUNG EINER SOLCHEN ARBEITSMASCHINE
MACHINE DE TRAVAIL ET PROCÉDÉ POUR CHANGER LE SENS DE MARCHE D'UNE TELLE MACHINE DE TRAVAIL

(30) Priority: 03.11.2021 GB 202115798
(43) Date of publication of application: 10.05.2023
(73) Proprietor: J.C. Bamford Excavators Limited, Uttoxeter Staffordshire ST14 5JP (GB)
(72) Inventor: OWSTON, Charles Edward, Uttoxeter, ST14 5JP (GB); CHAPMAN, James, Uttoxeter, ST14 5JP (GB)
(74) Representative: Sugden, Mark William

(56) References cited:
- EP-A1- 0 231 393
- JP-A- 2017 177 984
- KR-A- 20210 119 034
- US-A1- 2004 180 753
- US-A1- 2020 369 280

## Description

### FIELD

The present teachings relate to a working machine and a method for operating a working machine.

### BACKGROUND

Off-highway vehicles or working machines are for example those used in construction industries configured to transport loads over a surface (e.g. backhoe loaders, slew excavators, telescopic handlers, forklifts, skid-steer loaders etc.). These working machines typically have a body supported by a ground-engaging propulsion structure such as front and rear wheels, or a pair of endless tracks. To propel the working machine, a drive arrangement, including for example a transmission and a prime mover such as an internal combustion engine or electric motor, provides motive power to the ground-engaging propulsion structure. Working machines typically have a working arm pivotally mounted to the body of the machine, and a working implement, such as a bucket or a grabber, attached to the end of the arm via a coupling device. Attachment of the working implement enables the working machine to perform a variety of tasks on a work site.

Some of these tasks involve changing the driving direction of the machine (i.e. from forward to reverse, or from reverse to forward) many times; for example when the machine is used for loading or unloading. To change the driving direction of a working machine, it is common for the operator to brake the working machine and to select an intended driving direction of the working machine via a gear selector. When a new intended driving direction is selected whilst the working machine is still in motion, the drive arrangement applies a torque to the ground-engaging propulsion structure, which acts to decelerate the working machine until stationary, before moving the working machine in the new intended driving direction.

A problem with such a direction changing process is that it causes significant stresses to act on the drive arrangement, which can reduce the lifetime of the drive arrangement. Moreover, it has been found that using the drive arrangement primarily to decelerate a working machine during a change in driving direction can cause the machine to jolt on initiation of the direction changing process.

US2004/0180753 describes a running control device for an industrial vehicle which generates no speed change shock when the traveling direction is switched to the opposite direction by the forward-reverse selection member during the running of the vehicle. The running control device comprises a forward-reverse selected direction detection sensor which detects the selected traveling direction, a transmission which has a forward clutch and a reverse clutch that switch the traveling direction between the forward direction and reverse direction, and which transmits the driving torque of the engine to the driving wheels via the clutches, a brake which applies braking to the vehicle, a vehicle speed sensor which detects the vehicle speed, and a controller which gradually decelerates the vehicle by means of the brake when the selected traveling direction that has been detected is switched, and controls the engaging force of the forward or reverse clutch corresponding to the selected traveling direction and the braking force of the brake before the detected vehicle speed reaches zero, thus controlling the deceleration torque and acceleration torque so that the fluctuation in the acceleration around the point of time at which the traveling direction is reversed is weakened. JP2017177984A discloses a working machine with the features of the preamble of present claim 1.

The present teachings seek to overcome or at least mitigate one or more problems associated with the prior art.

### SUMMARY

The present invention provides a working machine and a method for changing the driving direction of a working machine according to the appended claims.

A first aspect of the present invention provides a working machine pursuant to independent claim 1.

Advantageously, the configuration of the braking system, control system and sensor assembly enables automated braking of the working machine based on a determined output of the drive arrangement, which may simplify control of the working machine. The working machine may comprise a forward-neutral- reverse drive selector to select an intended driving direction of the working machine. The control system may be configured to actuate the braking system in response to an input from the drive selector selecting a new intended driving direction of the working machine.

Advantageously, actuating the braking system when a new intended driving direction is indicated via the drive director (i.e. via the forward/neutral/reverse (FNR) selector) enables the working machine to be decelerated automatically via the braking system instead of using the transmission to effect deceleration of the working machine. By using the braking system instead of the transmission, the working machine can be decelerated in a smooth manner, which may improve the driving experience of the operator of the working machine. Moreover, by using the braking system, less stress may be imparted onto the transmission during a direction change, which may help to increase the lifespan of the components of the transmission

The control system may be configured to control or restrict a rotational speed of the drive arrangement in response to an input from the drive selector selecting a new intended driving direction of the working machine.

Advantageously, restricting a rotational speed of the drive arrangement when a new driving direction is indicated may help to reduce the travel speed of the working machine and enable smoother gear changes during a direction change.

The control system may be configured such that the first braking force applied to the ground engaging propulsion structure is proportional to the determined speed of travel of the working machine or rotational speed of the drive arrangement.

Advantageously, applying a braking force which is proportional (i.e. directly proportional or inversely proportional) to the speed of travel or rotational speed of the drive arrangement may help to ensure the working machine is decelerated smoothly by inhibiting jolting of the working machine.

The control system may be configured such that the first braking force applied to the ground engaging propulsion structure is substantially constant.

The output of the drive arrangement may be determined through one or more of: a speed of travel of the working machine; a rotational speed of the drive arrangement; a torque output of the drive arrangement; and/or a torque within a transmission of the drive arrangement.

The control system may be configured to apply the first braking force to the ground engaging propulsion structure when a rotational speed of the drive arrangement is below a pre-determined threshold.

Applying a braking force when the rotational speed of the drive arrangement is below a pre-determined threshold may help to decelerate the working machine automatically when the operator has released a drive pedal of the working machine.

The working machine may comprise a forward-neutral-reverse drive selector to select an intended driving direction of the working machine. The control system may be configured to apply the first braking force to the ground engaging propulsion structure in response to a rotational speed of the drive arrangement being below a pre-determined threshold only when the working machine is in neutral.

The control system may be configured to apply the first braking force to the ground engaging propulsion structure when a speed of travel of the working machine is below a pre-determined threshold.

Applying a braking force when the speed of travel of the working machine is below a first pre-determined speed threshold may help to automatically decelerate the working machine to stationary when initially travelling at low speed, and subsequently keep the working machine stationary, without the operator needing to actuate the braking system manually.

The working machine may comprise a forward-neutral-reverse drive selector to select an intended driving direction of the working machine. The control system may be configured to apply the first braking force to the ground engaging propulsion structure in response to a speed of travel of the working machine being below a pre-determined threshold only when the working machine is in neutral.

The braking system may be a hydraulic braking system actuated by hydraulic fluid pressure, and wherein the hydraulic fluid pressure applied to provide the first braking force is proportional to the determined speed of travel or rotational speed of the drive arrangement.

Advantageously, the hydraulic braking system may use pressurised hydraulic fluid from a hydraulic fluid system of the working machine to enable the control system to automatically actuate the brakes. Applying a hydraulic fluid pressure that is proportional to the determined speed of travel and/or rotational speed of the drive arrangement, may help to ensure that the working machine decelerates smoothly.

The control system may be configured to adjust the hydraulic fluid pressure by controlling a position of a valve, e.g. a solenoid valve, of the braking system.

Controlling a valve to adjust the hydraulic fluid pressure enables accurate and robust control of brake actuation by the control system.

The braking system may be a hydraulic braking system that is actuated by hydraulic fluid pressure and comprises at least one hydraulic power brake to apply a braking force to the ground engaging propulsion structure.

The control system may be configured to actuate the braking system such that the working machine is decelerated at a predetermined rate.

Decelerating the working machine at a predetermined rate may help to ensure that the working machine is decelerated in a smooth fashion.

The magnitude of the first braking force may be based on one or more of: the speed of travel of the working machine; a rotational speed of the drive arrangement; the mass of the machine; a load carried by the working machine; and/or the position of the arm relative to the body.

The control system may be configured to actuate the braking system such that the first braking force applied increases as the speed of travel of the working machine decreases.

Increasing the applied first braking force as the speed of travel decreases may help to ensure that the working machine is decelerated in a smooth fashion, for example, by inhibiting jolting of the working machine.

The control system may be configured to actuate the braking system such that the first braking force applied is inversely proportional to the speed of travel of the working machine.

The control system may be configured to actuate the braking system such that the first braking force applied decreases as the speed of travel of the working machine decreases.

Decreasing the applied first braking force as the speed of travel decreases may help to ensure that the working machine is decelerated in a smooth fashion, for example, by inhibiting jolting of the working machine.

The control system may be configured to actuate the braking system such that the first braking force applied is proportional to the speed of travel of the working machine.

The working machine comprises a brake pedal for operation by an operator, wherein the brake pedal is configured to actuate the braking system to apply a second braking force based on a position of the brake pedal relative to a rest position of the brake pedal.

The brake pedal may enable the operator of the working machine to actuate the braking system manually, for example, during routine operation and/or in an emergency.

The braking system is configured such that, when first and second braking forces are being applied simultaneously, the greater of the first and second braking forces is applied to the ground engaging propulsion structure.

Applying the greater of the first and second braking forces may enable the brake control input device to override the control system when the operator of the working machine wishes to apply a greater braking force than that implemented by the control system. This may improve the safe operation of the working machine since it may enable the operator to rapidly decelerate the working machine in an emergency for example.

The braking system may be a hydraulic braking system actuated by hydraulic fluid pressure, and wherein the braking system comprises a shuttle valve comprising first and second inlets arranged to receive hydraulic fluid associated with the first and second braking forces and comprises an outlet to transmit hydraulic fluid to actuate the braking system.

The arrangement of the shuttle valve provides a robust and effective means to enable the brake pedal to override the control system when desired, with minimal moving parts and requiring no electrical power.

The working machine may comprise an inclination sensor configured to determine an inclination of the working machine. The control system may be configured to actuate the braking system to apply the first braking force when an inclination of the working machine is above a pre-determined inclination threshold and the speed of travel of the working machine is less than or equal to a pre-determined travel speed threshold.

Applying a braking force when an inclination of the working machine is above a pre-determined inclination threshold and the speed of travel of the working machine is below a second pre-determined speed threshold may help to keep a working machine stationary when on an incline, such as a hill, without the operator needing to actuate the braking system manually.

A second aspect of the teachings provides for a method for changing the driving direction of the working machine of the first aspect, the method comprising the steps of: selecting a new intended driving direction via a drive selector; and applying the first braking force to the ground engaging propulsion structure via the braking system based on an output of the drive arrangement.

Another aspect of the present invention provides for a method for operating the working machine of the first aspect, the method comprising the steps of: determining whether the speed of travel of the working machine is below a pre-determined threshold and/or whether a rotational speed of the drive arrangement is less than pre-determined threshold; and applying the first braking force to the ground engaging propulsion structure via the braking system when the determined speed of travel of the working machine is less than the pre-determined threshold or when the determined rotational speed of the drive arrangement is less than the pre-determined threshold.

### BRIEF DESCRIPTION OF THE DRAWINGS

Embodiments are now disclosed by way of example only with reference to the drawings, in which:
Figure 1 is a side view of a working machine according to an embodiment;
Figure 2 is a block diagram of components of the working machine of Figure 1;
Figure 3 is a block diagram of a braking system of the working machine of Figure 1; and
Figure 4 is a flowchart of a method for changing the driving direction of the working machine of Figure 1.

### DETAILED DESCRIPTION OF EMBODIMENT(S)

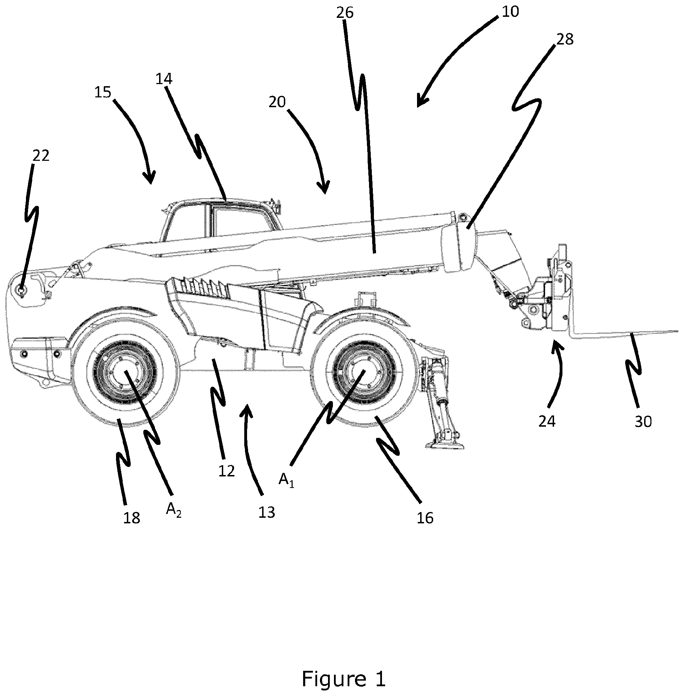

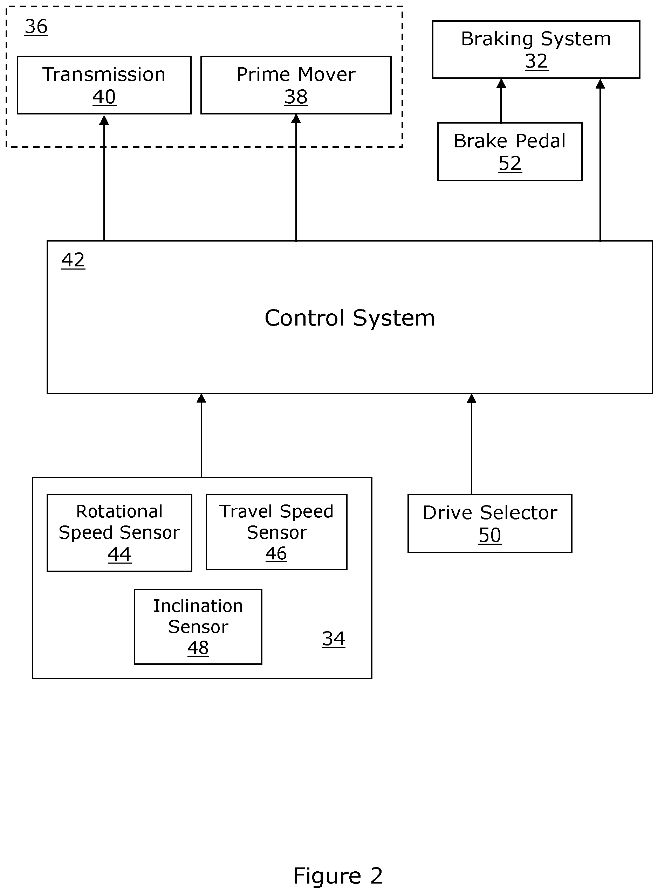

Referring to Figures 1 to 3, a working machine 10 is illustrated. The working machine 10 may be considered to be a load handling machine. In this embodiment, the working machine 10 is a telescopic handler. In other embodiments the working machine 10 may be a rotating telescopic handler, a forklift, an excavator, a skid-steer loader, a compact track loader, a wheel loader, a telescopic wheel loader, or a tractor, for example. Such working machines may be denoted as off-highway vehicles or as non-road mobile machinery.

The working machine 10 includes a body 12. The body 12 may include, for example, an operator's cab 14 from which an operator can operate the machine 10. The operator cab 14 may be mounted on the body 12 so as to be offset from a centre of the body. Although in alternative arrangements, the cab 14 may be substantially central. The body 12 includes an undercarriage 13 or chassis, and a superstructure 15. The superstructure 15 is rotatable (e.g. about a substantially vertical axis) relative to the undercarriage 13. Put another way, the superstructure may be rotatable relative to the ground engaging propulsion structure. In the illustrated arrangement, the operator cab 14 is mounted onto the superstructure 15.

The working machine 10 has a ground engaging propulsion arrangement. The ground engaging propulsion arrangement or structure supports the body 12. The ground engaging propulsion structure includes a first, or front, axle A1 and a second, or rear, axle A2, each axle being coupled to a pair of wheels 16, 18. Put another way, the ground engaging propulsion structure includes front and rear wheels. In other embodiments, the ground engaging propulsion structure may include a pair of endless tracks.

The working machine 10 includes a drive arrangement 36 configured to provide motive power to the ground engaging propulsion structure 16, 18, so as to move/drive the working machine 10 over a surface. The drive arrangement 36 includes a primer mover 38 and a transmission 40. The prime mover 38 may be an internal combustion engine, an electric motor, or may be a hybrid comprising both an internal combustion engine, an electric motor. The drive arrangement 36 is configured to provide motive power to the ground-engaging propulsion structure 16, 18 from the prime mover 38 via the transmission 40.

A working arm 20 is pivotally connected to the body 12. In the arrangement shown, the working arm 20 is pivotally mounted to the superstructure 15. The working arm 20 is connected to the body 12 by a mount 22 proximate a first end, or proximal end, of the working arm 20. The working arm 20 can be moved with respect to the body 12 and the movement is preferably, at least in part, rotational movement about the mount 22. The rotational movement is about a substantially transverse axis of the machine 10. Rotational movement of the working arm 20 with respect to the body 12 is, in an embodiment, achieved by use of at least one lifting actuator (not shown) coupled between the arm 20 and the body 12.

The working arm 20 may be a telescopic arm, having a first section 26 connected to the mount 22 and a second section 28 which is telescopically fitted to the first section 26. In this embodiment, the second section 28 of the working arm 20 is telescopically moveable with respect to the first section 26 such that the working arm 20 can be extended and retracted. Movement of the second section 28 with respect to the first section 26 of the working arm 20 may be achieved by use of an extension actuator (not shown), for example a double acting hydraulic linear actuator, an electric linear actuator, a telescopic extension ram, multiple extension rams, and/or a chain and pulley system. As will be appreciated, the working arm 20 may include a plurality of sections, for example two, three, four or more sections. Each arm section may be telescopically fitted to at least one other section, and an actuator may be provided therebetween. In alternative arrangements, the working arm 20 may not be telescopic and may include a first arm pivotally mounted to the mount 22. In such arrangements, the working arm 20 may also include a second arm pivotally mounted to the first arm.

A working implement is mounted to a second, or distal, end 21 of the working arm 20. In the illustrated arrangement, the working implement includes a carriage 24 including a pair of spaced apart forks 30 mounted thereto. In alternative arrangements, it will be appreciated that any suitable working implement may be mounted to the working arm 20 to suit the application. In such alternative arrangements, the working implement may be a bucket, a shovel, or a basket, for example.

The working machine 10 includes a braking system 32 actuatable to apply a first braking force to the propulsion structure 16, 18.

The working machine 10 includes a sensor assembly 34 configured to determine an output of the drive arrangement 36. In the arrangement shown, the sensor assembly 34 is configured to determine an output of the drive arrangement 36 in the form of a speed of travel of the working machine 10 and/or a rotational speed of the drive arrangement 36 and to provide an output to a control system 42. It will be appreciated that the output of the drive arrangement 36 may be based upon a torque output of the prime mover 38, torque within the transmission 40 or any other suitable output from the prime mover 38. The control system 42 is configured such that the first braking force applied to the propulsion structure 16, 18 is based on the determined output of the prime mover 38.

The sensor assembly 34 includes a rotational speed sensor 44 configured to determine a rotational speed of the drive arrangement 36. In embodiments in which the prime mover 38 is an internal combustion engine, the rotational speed determined by the rotational speed sensor 44 may correspond to a rotational speed of the engine's crankshaft. In embodiments in which the prime mover 38 is an electric motor, the rotational speed determined by the rotational speed sensor 44 may correspond to a rotational speed of the rotor and/or output shaft of the motor. Alternatively, the rotational speed determined by the rotational speed sensor 44 may correspond to a rotational speed of the transmission 40; e.g. a rotational speed of an input shaft to a gearbox of the transmission 40. The sensor assembly 34 includes a travel speed sensor 46 configured to determine a speed of travel of the working machine 10. The travel speed sensor 46 may determine the travel speed of the working machine 10 via any suitable means such as via sensing of the rotational speed of the wheels 16, 18 or the axles A1, A2, or via GPS. The control system 42 is configured such that the first braking force applied to the propulsion structure 16, 18 is based on the determined speed of travel of the working machine or rotational speed of the drive arrangement.

The working machine 10 includes control inputs to control operation of the working machine 10. The working machine 10 includes a drive selector 50. The drive selector is a forward/neutral/reverse (FNR) selector 50. The drive selector 50 engages drive in a selected direction, or selects a neutral gear. The drive selector 50 is configured to be operated by an operator of the working machine 10 to indicate an intended driving direction of the working machine 10, i.e. forward or reverse. The drive selector 50 may be located within the cab 14.

In a first mode of operation, the control system 42 is configured to control/actuate the braking system 32 to apply a braking force F1 to the ground-engaging propulsion structure 16, 18 when the input from the drive selector 50 indicates a new intended driving direction of the working machine 10. Put another way, the control system 42 is configured to control/actuate the braking system 32 to apply a braking force F1 to the ground-engaging propulsion structure 16, 18 when the drive selector 50 has been operated to indicate an intended change in driving direction, for example, from forward to reverse, or from reverse to forward.

In the first mode of operation, the control system 42 may be configured to actuate the braking system 32 such that the braking force F1 is proportional (i.e. directly proportional or inversely proportional) to the determined output of the drive arrangement 36. Put another way, the control system 42 is configured to actuate the braking system 32 such that the braking force F1 is proportional (i.e. directly proportional or inversely proportional) to the determined speed of travel or the determined rotational speed of the drive arrangement 36. Alternatively, in the first mode of operation, the braking force F1 may be substantially constant, and the control system 42 is configured to apply and remove the braking force F1.

In the first mode of operation, the control system 42 may be configured such that the braking force F1 applied to the ground-engaging propulsion structure 16, 18 is based on the determined output of the drive arrangement 36 by the sensor assembly 34, as has been discussed above. Put another way, in the first mode of operation, the control system 42 may be configured such that the braking force F1 applied to the ground-engaging propulsion structure 16, 18 is based on one or more of: a speed of travel of the working machine 10; a rotational speed of the drive arrangement 36; a torque output of the prime mover 38; a torque within the transmission 40; or any other suitable output from the prime mover 38.

In the first mode of operation, the control system 42 may be configured to control the drive arrangement 36 when the input from the drive selector 50 indicates a new intended driving direction of the working machine 10. Put another way, the control system 42 may be configured to control, limit or restrict a rotational speed of the drive arrangement 36 (i.e. the prime mover 38) when the input from the drive selector 50 indicates a new intended driving direction of the working machine 10. The control system 42 monitors the rotational speed of the drive arrangement 36 via the input from the rotational speed sensor 44. The control system 42 may send a signal (e.g. a TSC1 signal) to a controller of the prime mover 38 to reduce the rotational speed of the prime mover 38 such that the rotational speed is less than or equal to a first predetermined rotational speed threshold in response to the input from the drive selector 50 indicating a new intended driving direction. The control system 42 may be configured to control the drive arrangement 36 such that the torque supplied from the drive arrangement 36 to the ground-engaging propulsion structure corresponds to the intended driving direction. The control system 42 may send a signal to a controller of a gearbox of the transmission 40 to change gear in response to an operation of the drive selector 50 indicating a new intended driving direction of the working machine 10. In embodiments where the prime mover 38 is in the form of an electric motor, the control system 42 may send a signal to a controller of the prime mover 38 to provide a torque to the ground-engaging propulsion structure which corresponds to the intended driving direction.

The working machine 10 includes a brake pedal 52. The braking system 32 is configured to apply a braking force to the wheels 16, 18. The braking system 32 is configured such that it is actuated by the brake pedal 52 to apply the braking force to the ground engaging propulsion structure 16, 18. In the illustrated embodiment, the braking system 32 is a hydraulic braking system that is actuated by hydraulic fluid pressure. The brake pedal 52 supplies fluid to brakes 56 at one or more of the wheels 16, 18. The brake pedal 52 is configured to be operated by an operator of the working machine 10, and may be located in the cab 14.

The control system 42 is configured to actuate the braking system 32 to apply a first braking force to the ground-engaging propulsion structure 16, 18. The brake pedal 52 is configured to actuate the braking system 32 to apply a second braking force to the ground-engaging propulsion structure, where the second braking force applied is based on a position of the brake pedal 52 relative to a rest position of the brake pedal 52. The braking system 32 is configured such that when the control system 42 actuates the braking system 32 to apply the first braking force to the ground-engaging propulsion structure, and the brake pedal 52 is operated to actuate the braking system 32 to apply the second braking force to the ground-engaging propulsion structure simultaneously, the greater of the first and second braking forces is applied to the ground engaging propulsion structure 16, 18.

The braking system 32 includes a hydraulic brake 56. It will be appreciated that each wheel 16, 18 may include an associated brake 56 to apply a braking force thereto. The braking system 32 includes a control valve 60. The control system 42 is configured to adjust a hydraulic pressure by controlling a position of the control valve 60. As such, the pressure of the hydraulic fluid supplied to the braking system 32 can be controlled by the control system 42. In the illustrated, the control valve 60 is a solenoid-controlled valve, and the signal sent from the control system 42 to the control valve 60 corresponds to an electrical current to be supplied to the solenoid.

The braking system 32 includes a shuttle valve 58. The hydraulic brake 56 is in fluid communication with an outlet 58a of the shuttle valve 58. In this way, the hydraulic brake 56 is actuated via hydraulic fluid transmitted from the outlet 58a of the shuttle valve 58 to the hydraulic brake 56.

The shuttle valve 58 includes a first inlet 58b configured to receive hydraulic fluid in response to an output from the control system 42 (i.e. via the control valve 60). When the control system 42 actuates the braking system 32 to apply the first braking force to the ground-engaging propulsion structure 16, 18 via control of the control valve 60, the first inlet 58b of the shuttle valve 58 receives hydraulic fluid at a first pressure corresponding to the first braking force. The shuttle valve 58 includes a second inlet 58c configured to receive hydraulic fluid in response to depression of the brake pedal 52. When the brake pedal 52 is operated to actuate the braking system 32 to apply the second braking force to the braking system 32, the second inlet 58v of the shuttle valve 58 receives hydraulic fluid at a second pressure corresponding to the second braking force.

The shuttle valve 58 is configured such that hydraulic fluid exiting the outlet 58a is a pressure equal to the greater of the two hydraulic fluid flows. Thus, when the control system 42 actuates the braking system 32 to apply the first braking force and the brake pedal 52 actuates the braking system 32 to apply the second braking force simultaneously, hydraulic fluid is transmitted from the outlet 58a of the shuttle valve 58 to the hydraulic brake 56 at a pressure corresponding to the greater of the first braking force and the second braking force. Put another way, the hydraulic brake 56 is actuated to apply the greater of the first and second braking forces to the ground-engaging propulsion structure 16, 18. This enables the operator of the working machine 10 to override the control system 42 in order to apply a large braking force to the ground-engaging propulsion structure than that implemented by the control system 42.

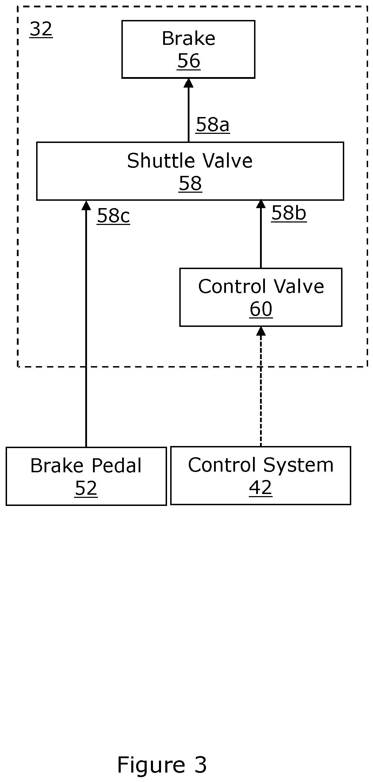

In Figure 3, only one hydraulic brake 56 is shown. However, the working machine 10 may include two or more hydraulic brakes 56, for example, three or more, or four or more hydraulic brakes 56, where each hydraulic brake 56 is in fluid communication with the outlet 58a of the shuttle valve 58. In alternative embodiments, the braking system 32 may be a pneumatic, an electronic, or a hybrid braking system. For example, the braking system 32 may be an electronic braking system including an electronically actuated brake, which may be actuated by both the control system and the brake pedal to apply a braking force to the ground-engaging propulsion structure.

In a second mode of operation, the control system 42 is configured to apply a braking force F2 to the ground engaging propulsion structure 16, 18 when a rotational speed of the drive arrangement 36 is below a pre-determined threshold and/or when a speed of travel of the working machine 10 is below a pre-determined threshold.

In the second mode of operation, it will be appreciated that the braking force applied may be a substantially constant braking force. Alternatively, the control system 42 may be configured such that the braking force applied to the ground-engaging propulsion structure16, 18 is based on an output of the drive arrangement 36.

In such arrangements, the control system 42 may be configured such that the braking force F2 applied to the ground-engaging propulsion structure 16, 18 is based on the determined output of the drive arrangement 36 by the sensor assembly 34, such as one or more of: a speed of travel of the working machine 10; a rotational speed of the drive arrangement 36; a torque output of the prime mover 38; a torque within the transmission 40; or any other suitable output from the prime mover 38. In the second mode of operation, the control system 42 may be configured such that the braking force F2 applied to the ground-engaging propulsion structure 16, 18 is also and/or alternatively based on; a position of the throttle; a requested drive arrangement rotational speed; and/or a requested drive arrangement torque. one or more of: a speed of travel of the working machine 10; a rotational speed of the drive arrangement 36; a torque output of the prime mover 38; a torque within the transmission 40; or any other suitable output from the prime mover 38.

In the second mode of operation, the control system 42 may only apply the braking force to the ground engaging propulsion structure 16, 18 when it is determined that an operator of the working machine 10 is requesting to stop the working machine 10. It may be determined that an operator of the working machine 10 is requesting to stop the working machine 10 when the drive selector is placed in neutral and/or when the operator has released a drive/accelerator pedal of the working machine 10. Applying a braking force when the speed of travel of the working machine 10 is below a pre-determined speed threshold and/or when a rotational speed of the drive arrangement 36 is below a pre-determined threshold helps to automatically bring the working machine 10 to a stop when initially travelling at low speed and requesting to stop, without the operator needing to actuate the braking system 32 manually. It will be appreciated that the braking force applied may differ between when an operator lifts off the throttle, but remains with forward or reverse drive selected, and when the drive selector is placed in neutral.

The sensor assembly 34 may include an inclination sensor 48. The inclination sensor 48 is configured to determine an angle of inclination of the working machine 10. The inclination sensor 48 provides an output of the determined inclination angle to the control system 42. In arrangements where the working machine 10 includes the inclination sensor 48, the control system 42 is configured, in a third mode of operation, to actuate the braking system 32 to apply a braking force when an inclination of the working machine 10 is above a pre-determined inclination threshold. In the third mode of operation, the control system 42 may be configured such that it only applies a braking force to the ground engaging propulsion structure 16, 18 when the speed of travel of the working machine 10 is less than or equal to a pre-determined travel speed threshold. In the third mode of operation, the control system 42 may be configured such that it only applies a braking force to the ground engaging propulsion structure 16, 18 when it is determined that an operator of the working machine 10 is requesting to stop the working machine 10. It may be determined that an operator of the working machine 10 is requesting to stop the working machine 10 when the drive selector is placed in neutral and/or when the operator has released a drive/accelerator pedal of the working machine 10.

In the third mode of operation, the braking force applied may be a substantially constant braking force. Alternatively, the control system 42 may be configured such that the braking force applied to the ground-engaging propulsion structure 16, 18 is based on an output of the drive arrangement 36 (e.g. based on the speed of travel of the working machine, a rotational speed of the drive arrangement 36, a torque of the drive arrangement 36, etc.), in a similar manner as has been described above, and/or may be based on the angle of inclination detected by the inclination sensor 48.

In one arrangement, the control system 42 is configured to actuate the braking system 32 such that the braking force F1 increases as the determined speed of travel decreases. For example, the control system 42 may be configured to actuate the braking system 32 such that the braking force F1 is inversely proportional to the determined speed of travel. Controlling the braking force F1 such that it increases as the determined speed of travel reduces helps to ensure that the working machine 10 is decelerated smoothly such that jolting of the working machine 10 at the point when the brakes are applied is reduced.

In another arrangement, the control system 42 is configured to actuate the braking system 32 such that the braking force F1 decreases as the determined speed of travel decreases. For example, the control system 42 may be configured to actuate the braking system 32 such that the braking force F1 is proportional to the determined speed of travel. Controlling the braking force F1 such that it decreases as the determined speed of travel reduces helps to ensure that the working machine 10 is decelerated smoothly to a stop such that jolting of the working machine 10 when the machine comes to a standstill is reduced.

The control system 42 may be configured to actuate the braking system 32 such that the braking force F1 applied to the ground-engaging propulsion structure decelerates the working machine 10 at a predetermined rate, i.e. at a predetermined rate of deceleration or at a predetermined jerk. Actuation of the braking system 32 (i.e. the magnitude of the first braking force) may be based on one or more of: the determined speed of travel of the working machine 10; a rotational speed of the drive arrangement 36; the mass of the machine; a load carried by the working machine 10; or the position (i.e. inclination and extension) of the arm 20 relative to the body 12.

Although not illustrated, it will be appreciated that the working machine 10 may be provided with an operator input so as to enable the operator to manually enable and disable the control system 42, or to manually enable and disable one or more of the features of the control system 42 discussed above.

Although not illustrated, it will be appreciated that the sensor assembly 34 may be provided with a terrain sensor configured to determine characteristic of the ground over which the working machine 10 is travelling. In such arrangements, it will be understood that the braking force applied in each of the described modes of operation may be based on the characteristics of the ground determined by the terrain sensor.

The working machine 10 may be configured to indicate to an operator that the control system 42 is actuating the braking system 32. The working machine may be provided with an indicator, such as an audio and/or visual indicator, and the control system 42 may be configured to activate the indicator when it actuates the braking system 32. The working machine 10 may be configured to provide a tactile indicator to an operator that the control system 42 is actuating the braking system 32, for example this may be done by changing the resistance in the brake pedal 52.

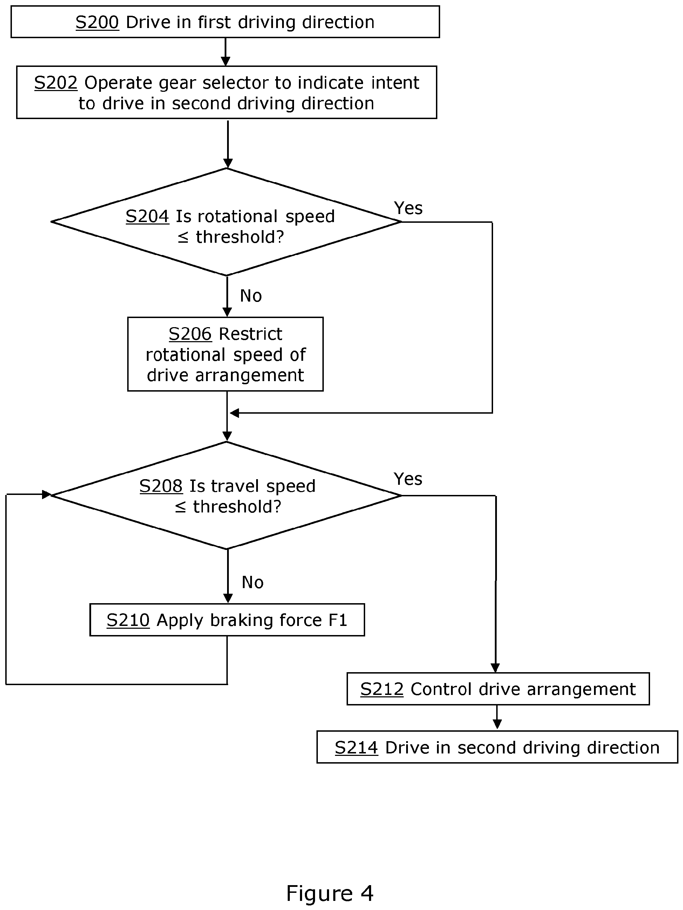

With reference to Figure 4, a method for changing the driving direction of the working machine 10 will be described in the following.

In step S200, the working machine 10 is driven in a first driving direction (i.e. forward or reverse). In step S202, the operator of the working machine 10 operates the drive selector 50 to select a new, or second, driving direction. In step S204, the control system 42 determines whether the determined rotational speed of the drive arrangement 36 is less than a predetermined rotational speed threshold.

If the determined rotational speed is greater than the predetermined rotational speed threshold ('No'), the method moves to step 206. In step S206, the control system 42 sends a signal to the drive arrangement 36 to control or restrict the rotational speed of the drive arrangement 36. This can be used to reduce the rotational speed of the drive arrangement 36 so as to be less than the predetermined rotational speed threshold.

If the determined rotational speed is less than the predetermined rotational speed threshold ('Yes'), then the method moves to step S208. In step 208, the control system 42 determined whether the determined speed of travel of the working machine 10 is less than a predetermined travel speed threshold.

If the determined speed of travel is greater than the predetermined travel speed threshold, the method moves to step 210. In step 210, the control system 42 actuates the braking system 32 to apply the braking force F1 to the ground-engaging propulsion structure 16, 18. The braking force F1 may be based on the determined speed of travel and/or the rotational speed of the drive arrangement, as previously discussed. The braking force F1 may be applied until the speed of travel is less than or equal to the predetermined travel speed threshold, at which point the control system 42 ceases actuating the braking system 32.

If the control system 42 determines that the determined speed of travel is less than or equal to the first predetermined travel speed threshold, the method moves to step S212. In step 212, the control system 42 sends a signal to the drive arrangement 36 to provide motive power to the ground-engaging propulsion structure 16, 18 to move the working machine 10 in the new, or second, travel direction. In step 214, the working machine 10 is driven in the second driving direction.

In alternative embodiments, two or more of steps S204, S206, S208, S210 and S212 may be performed in parallel, i.e. simultaneously. In yet further alternative embodiments, steps S208 and S210 may be performed before steps S204 and S206. In yet further alternative embodiments, the method may not include steps S204 and S206.

## Claims

1. A working machine (10) comprising:
a body (12);
a ground-engaging propulsion structure supporting the body;
a drive arrangement (36) configured to provide motive power to the ground engaging propulsion structure;
a braking system (32) actuatable to apply a braking force to the ground engaging propulsion structure;
a control system (42);
a sensor assembly (34) configured to determine an output of the drive arrangement and to provide an output to the control system; and
a brake pedal (52) for operation by an operator,
wherein the control system (42) is configured to control the braking system (32) to apply a first braking force to the ground engaging propulsion structure that is based on the determined output of the drive arrangement,
wherein the brake pedal (52) is configured to actuate the braking system (32) to apply a second braking force based on a position of the brake pedal (52) relative to a rest position of the brake pedal (52), **characterised in that**
the braking system (32) is configured such that, when first and second braking forces are being applied simultaneously, the greater of the first and second braking forces is applied to the ground engaging propulsion structure.

2. The working machine according to claim 1, comprising a forward-neutral-reverse drive selector (50) to select an intended driving direction of the working machine, wherein the control system is configured to actuate the braking system in response to an input from the drive selector selecting a new intended driving direction of the working machine and, optionally, the control system is configured to control or restrict a rotational speed of the drive arrangement in response to an input from the drive selector selecting a new intended driving direction of the working machine.

3. A working machine according to any preceding claim, wherein the control system is configured such that the first braking force applied to the ground engaging propulsion structure is proportional to the determined speed of travel of the working machine or rotational speed of the drive arrangement.

4. A working machine according to any one of claims 1 or 2, wherein the control system is configured such that the first braking force applied to the ground engaging propulsion structure is substantially constant.

5. A working machine according to any preceding claim, wherein the output of the drive arrangement is determined through one or more of: s speed of travel of the working machine; a rotational speed of the drive arrangement; a torque output of the drive arrangement; and/or a torque within a transmission of the drive arrangement.

6. A working machine according to any preceding claim, wherein the control system is configured to apply the first braking force to the ground engaging propulsion structure when a rotational speed of the drive arrangement is below a pre-determined threshold; optionally, wherein the working machine further comprises a forward-neutral-reverse drive selector to select an intended driving direction of the working machine and the control system is configured to apply the first braking force to the ground engaging propulsion structure in response to a rotational speed of the drive arrangement being below a pre-determined threshold only when the working machine is in neutral.

7. A working machine according to any preceding claim, wherein the control system is configured to apply the first braking force to the ground engaging propulsion structure when a speed of travel of the working machine is below a pre-determined threshold, and optionally, the working machine comprises a forward-neutral-reverse drive selector to select an intended driving direction of the working machine, and the control system is configured to apply the first braking force to the ground engaging propulsion structure in response to a speed of travel of the working machine being below a pre-determined threshold only when the working machine is in neutral.

8. A working machine according to any preceding claim, wherein the braking system is a hydraulic braking system actuated by hydraulic fluid pressure, and wherein the hydraulic fluid pressure applied to provide the first braking force is proportional to the determined speed of travel or rotational speed of the drive arrangement and, optionally, the control system is configured to adjust the hydraulic fluid pressure by controlling a position of a valve, e.g. a solenoid valve, of the braking system.

9. A working machine according to any preceding claim, wherein the braking system is a hydraulic braking system that is actuated by hydraulic fluid pressure and comprises at least one hydraulic power brake to apply a braking force to the ground engaging propulsion structure.

10. A working machine according to any preceding claim, wherein the control system is configured to actuate the braking system such that the working machine is decelerated at a predetermined rate and/or the magnitude of the first braking force is based on one or more of: the speed of travel of the working machine; a rotational speed of the drive arrangement; the mass of the machine; a load carried by the working machine; and/or the position of the arm relative to the body.

11. The working machine of any preceding claim, wherein the control system is configured to actuate the braking system such that the first braking force applied increases as the speed of travel of the working machine decreases and, optionally, the control system is configured to actuate the braking system such that the first braking force applied is inversely proportional to the speed of travel of the working machine.

12. The working machine of any one of claims 1 to 10, wherein the control system is configured to actuate the braking system such that the first braking force applied decreases as the speed of travel of the working machine decreases and, optionally, the control system is configured to actuate the braking system such that the first braking force applied is proportional to the speed of travel of the working machine.

13. The working machine according to any preceding claim, wherein the braking system is a hydraulic braking system actuated by hydraulic fluid pressure and comprises a shuttle valve comprising first and second inlets arranged to receive hydraulic fluid associated with the first and second braking forces and an outlet to transmit hydraulic fluid to actuate the braking system.

14. The working machine according to any preceding claim, comprising an inclination sensor configured to determine an inclination of the working machine, wherein the control system is configured to actuate the braking system to apply the first braking force when an inclination of the working machine is above a pre-determined inclination threshold and the speed of travel of the working machine is less than or equal to a pre-determined travel speed threshold.

15. A method for changing the driving direction of the working machine of any preceding claim, the method comprising the steps of:
determining whether the speed of travel of the working machine is below a pre-determined threshold and/or whether a rotational speed of the drive arrangement is less than pre-determined threshold; and
applying the first braking force to the ground engaging propulsion structure via the braking system when the determined speed of travel of the working machine is less than the pre-determined threshold or when the determined rotational speed of the drive arrangement is less than the pre-determined threshold.

## Patentansprüche

1. Arbeitsmaschine (10), umfassend:
einen Körper (12),
eine mit dem Boden in Eingriff stehende Antriebsstruktur, die den Körper trägt,
eine Antriebsanordnung (36), die dazu beschaffen ist, der mit dem Boden in Eingriff stehenden Antriebsstruktur Antriebskraft zuzuführen,
ein Bremssystem (32), das dazu betätigbar ist, eine Bremskraft auf die mit dem Boden in Eingriff stehende Antriebsstruktur auszuüben,
ein Steuersystem (42),
eine Sensoranordnung (34), die dazu beschaffen ist, eine Ausgabe der Antriebsanordnung zu bestimmen und eine Ausgabe an das Steuersystem bereitzustellen, und
ein Bremspedal (52) zur Betätigung durch einen Bediener,
wobei das Steuersystem (42) dazu beschaffen ist, das Bremssystem (32) zu steuern, um eine erste Bremskraft auf die mit dem Boden in Eingriff stehende Antriebsstruktur auszuüben, die auf der bestimmten Ausgabe der Antriebsanordnung basiert,
wobei das Bremspedal (52) dazu beschaffen ist, das Bremssystem (32) zu betätigen, um eine zweite Bremskraft auszuüben, die auf einer Position des Bremspedals (52) relativ zu einer Ruheposition des Bremspedals (52) basiert, **dadurch gekennzeichnet, dass**
das Bremssystem (32) derart beschaffen ist, dass wenn erste und zweite Bremskräfte gleichzeitig angewendet werden, die größere der ersten und zweiten Bremskräfte auf die mit dem Boden in Eingriff stehende Antriebsstruktur angewendet wird.

2. Arbeitsmaschine nach Anspruch 1, umfassend einen Vorwärts-Leerlauf-Rückwärts-Antriebswähler (50) zum Auswählen einer beabsichtigten Antriebsrichtung der Arbeitsmaschine, wobei das Steuersystem dazu beschaffen ist, das Bremssystem als Reaktion auf eine Eingabe vom Antriebswähler, der eine neue beabsichtigte Antriebsrichtung der Arbeitsmaschine auswählt, zu betätigen, und optional das Steuersystem dazu beschaffen ist, eine Drehzahl der Antriebsanordnung als Reaktion auf eine Eingabe vom Antriebswähler, der eine neue beabsichtigte Antriebsrichtung der Arbeitsmaschine auswählt, zu steuern oder zu beschränken,.

3. Arbeitsmaschine nach einem der vorhergehenden Ansprüche, wobei das Steuersystem derart beschaffen ist, dass die erste Bremskraft, die auf die bodenberührende Antriebsstruktur angewendet wird, proportional zur ermittelten Fahrgeschwindigkeit der Arbeitsmaschine oder Drehzahl der Antriebsanordnung ist.

4. Arbeitsmaschine nach einem der Ansprüche 1 oder 2, wobei das Steuersystem derart beschaffen ist, dass die erste Bremskraft, die auf die bodenberührende Antriebsstruktur angewendet wird, im Wesentlichen konstant ist.

5. Arbeitsmaschine nach einem der vorhergehenden Ansprüche, wobei die Leistung der Antriebsanordnung durch eines oder mehreres bestimmt wird von: Fahrgeschwindigkeit der Arbeitsmaschine, Drehzahl der Antriebsanordnung, Drehmomentabgabe der Antriebsanordnung und/oder Drehmoment innerhalb eines Getriebes der Antriebsanordnung.

6. Arbeitsmaschine nach einem der vorhergehenden Ansprüche, wobei das Steuersystem dazu beschaffen ist, die erste Bremskraft auf die bodenberührende Antriebsstruktur auszuüben, wenn eine Drehzahl der Antriebsanordnung unter einem vorgegebenen Schwellenwert liegt, wobei die Arbeitsmaschine optional ferner einen Vorwärts-Leerlauf-Rückwärts-Antriebswähler zum Auswählen einer beabsichtigten Antriebsrichtung der Arbeitsmaschine umfasst und das Steuersystem dazu beschaffen ist, die erste Bremskraft auf die bodenberührende Antriebsstruktur auszuüben, wenn eine Drehzahl der Antriebsanordnung unter einem vorgegebenen Schwellenwert liegt, und zwar nur dann, wenn sich die Arbeitsmaschine im Leerlauf befindet.

7. Arbeitsmaschine nach einem der vorhergehenden Ansprüche, wobei das Steuersystem dazu beschaffen ist, die erste Bremskraft auf die bodenberührende Antriebsstruktur auszuüben, wenn eine Fahrgeschwindigkeit der Arbeitsmaschine unter einem vorbestimmten Schwellenwert liegt, und wobei die Arbeitsmaschine optional einen Vorwärts-Leerlauf-Rückwärts-Antriebswähler umfasst, um eine beabsichtigte Antriebsrichtung der Arbeitsmaschine auszuwählen, und wobei das Steuersystem dazu beschaffen ist, die erste Bremskraft auf die bodenberührende Antriebsstruktur auszuüben, wenn eine Fahrgeschwindigkeit der Arbeitsmaschine unter einem vorbestimmten Schwellenwert liegt, und zwar nur dann, wenn sich die Arbeitsmaschine im Leerlauf befindet.

8. Arbeitsmaschine nach einem der vorhergehenden Ansprüche, wobei das Bremssystem ein hydraulisches Bremssystem ist, das durch Hydraulikflüssigkeitsdruck betätigt wird, und wobei der Hydraulikflüssigkeitsdruck, der zum Bereitstellen der ersten Bremskraft angewendet wird, proportional zur bestimmten Fahrgeschwindigkeit oder Drehzahl der Antriebsanordnung ist, und wobei das Steuersystem optional dazu beschaffen ist, den Hydraulikflüssigkeitsdruck durch Steuern einer Position eines Ventils, z. B. eines Magnetventils, des Bremssystems einzustellen.

9. Arbeitsmaschine nach einem der vorhergehenden Ansprüche, wobei das Bremssystem ein hydraulisches Bremssystem ist, das durch Hydraulikflüssigkeitsdruck betätigt wird und mindestens eine hydraulische Servobremse umfasst, um eine Bremskraft auf die mit dem Boden in Eingriff stehende Antriebsstruktur auszuüben.

10. Arbeitsmaschine nach einem der vorhergehenden Ansprüche, wobei das Steuersystem dazu beschaffen ist, das Bremssystem derart zu betätigen, dass die Arbeitsmaschine mit einer vorgegebenen Geschwindigkeit abgebremst wird und/oder die Stärke der ersten Bremskraft auf einem oder mehreren basiert von: der Fahrgeschwindigkeit der Arbeitsmaschine, einer Drehzahl der Antriebsanordnung, der Masse der Maschine, einer von der Arbeitsmaschine getragenen Last und/oder der Position des Arms relativ zum Körper.

11. Arbeitsmaschine nach einem der vorhergehenden Ansprüche, wobei das Steuersystem dazu beschaffen ist, das Bremssystem derart zu betätigen, dass die aufgebrachte erste Bremskraft zunimmt, wenn die Fahrgeschwindigkeit der Arbeitsmaschine abnimmt, und wobei das Steuersystem optional dazu beschaffen ist, das Bremssystem derart zu betätigen, dass die aufgebrachte erste Bremskraft umgekehrt proportional zur Fahrgeschwindigkeit der Arbeitsmaschine ist.

12. Arbeitsmaschine nach einem der Ansprüche 1 bis 10, wobei das Steuersystem dazu beschaffen ist, das Bremssystem derart zu betätigen, dass die erste aufgebrachte Bremskraft abnimmt, wenn die Fahrgeschwindigkeit der Arbeitsmaschine abnimmt, und optional das Steuersystem dazu beschaffen ist, das Bremssystem derart zu betätigen, dass die erste aufgebrachte Bremskraft proportional zur Fahrgeschwindigkeit der Arbeitsmaschine ist.

13. Arbeitsmaschine nach einem der vorhergehenden Ansprüche, wobei das Bremssystem ein hydraulisches Bremssystem ist, das durch Hydraulikflüssigkeitsdruck betätigt wird, und ein Wechselventil umfasst, das erste und zweite Einlässe umfasst, die so angeordnet sind, dass sie Hydraulikflüssigkeit aufnehmen, die mit der ersten und zweiten Bremskraft assoziiert ist, und einen Auslass zum Übertragen von Hydraulikflüssigkeit zum Betätigen des Bremssystems.

14. Arbeitsmaschine nach einem der vorhergehenden Ansprüche, umfassend einen Neigungssensor, der dazu beschaffen ist, eine Neigung der Arbeitsmaschine zu bestimmen, wobei das Steuersystem dazu beschaffen ist, das Bremssystem zu betätigen, um die erste Bremskraft anzuwenden, wenn eine Neigung der Arbeitsmaschine über einem vorbestimmten Neigungsschwellenwert liegt und die Fahrgeschwindigkeit der Arbeitsmaschine kleiner oder gleich einem vorbestimmten Fahrgeschwindigkeitsschwellenwert ist.

15. Verfahren zum Ändern der Antriebsrichtung der Arbeitsmaschine nach einem der vorhergehenden Ansprüche, das Verfahren umfassend die Schritte:
Feststellen, ob die Fahrgeschwindigkeit der Arbeitsmaschine unter einem vorgegebenen Schwellenwert liegt und/oder ob eine Drehzahl der Antriebsanordnung kleiner als der vorgegebene Schwellenwert ist, und
Ausüben der ersten Bremskraft auf die mit dem Boden in Eingriff stehende Antriebsstruktur über das Bremssystem, wenn die ermittelte Fahrgeschwindigkeit der Arbeitsmaschine kleiner als der vorgegebene Schwellenwert ist oder wenn die ermittelte Drehzahl der Antriebsanordnung kleiner als der vorgegebene Schwellenwert ist.

## Revendications

1. Machine de travail (10) comprenant :
un corps (12) ;
une structure de propulsion venant en prise avec le sol soutenant le corps ;
un agencement d'entraînement (36) configuré pour fournir une puissance motrice à la structure de propulsion venant en prise avec le sol ;
un système de freinage (32) actionnable pour appliquer une force de freinage à la structure de propulsion venant en prise avec le sol ;
un système de commande (42) ;
un ensemble capteur (34) configuré pour déterminer une sortie de l'agencement d'entraînement et pour fournir une sortie au système de commande ; et
une pédale de frein (52) destinée à être actionnée par un opérateur,
dans laquelle le système de commande (42) est configuré pour commander le système de freinage (32) afin d'appliquer une première force de freinage à la structure de propulsion venant en prise avec le sol qui est basée sur la sortie déterminée de l'agencement d'entraînement,
dans laquelle la pédale de frein (52) est configurée pour actionner le système de freinage (32) afin d'appliquer une seconde force de freinage sur la base d'une position de la pédale de frein (52) par rapport à une position de repos de la pédale de frein (52), **caractérisée en ce que**
le système de freinage (32) est configuré de sorte que, lorsque des première et seconde forces de freinage sont appliquées simultanément, la plus grande des première et seconde forces de freinage est appliquée à la structure de propulsion venant en prise avec le sol.

2. Machine de travail selon la revendication 1, comprenant un sélecteur (50) de marche avant-point mort-marche arrière pour sélectionner un sens de marche voulu de la machine de travail, dans laquelle le système de commande est configuré pour actionner le système de freinage en réponse à une entrée du sélecteur de marche sélectionnant un nouveau sens de marche voulu de la machine de travail et, facultativement, le système de commande est configuré pour commander ou restreindre une vitesse de rotation de l'agencement d'entraînement en réponse à une entrée du sélecteur de marche sélectionnant un nouveau sens de marche voulu de la machine de travail.

3. Machine de travail selon une quelconque revendication précédente, dans laquelle le système de commande est configuré de sorte que la première force de freinage appliquée à la structure de propulsion venant en prise avec le sol est proportionnelle à la vitesse de déplacement déterminée de la machine de travail ou à la vitesse de rotation de l'agencement d'entraînement.

4. Machine de travail selon l'une quelconque des revendications 1 ou 2, dans laquelle le système de commande est configuré de sorte que la première force de freinage appliquée à la structure de propulsion venant en prise avec le sol est sensiblement constante.

5. Machine de travail selon une quelconque revendication précédente, dans laquelle la sortie de l'agencement d'entraînement est déterminée par un ou plusieurs parmi : une vitesse de déplacement de la machine de travail ; une vitesse de rotation de l'agencement d'entraînement ; une puissance totale de l'agencement d'entraînement ; et/ou un couple dans une transmission de l'agencement d'entraînement.

6. Machine de travail selon une quelconque revendication précédente, dans laquelle le système de commande est configuré pour appliquer la première force de freinage à la structure de propulsion venant en prise avec le sol lorsqu'une vitesse de rotation de l'agencement d'entraînement est inférieure à un seuil prédéterminé ; facultativement, la machine de travail comprenant en outre un sélecteur de marche avant-point mort-marche arrière pour sélectionner un sens de marche voulu de la machine de travail et le système de commande est configuré pour appliquer la première force de freinage à la structure de propulsion venant en prise avec le sol en réponse à une vitesse de rotation de l'agencement d'entraînement inférieure à un seuil prédéterminé uniquement lorsque la machine de travail est en position point mort.

7. Machine de travail selon une quelconque revendication précédente, dans laquelle le système de commande est configuré pour appliquer la première force de freinage à la structure de propulsion venant en prise avec le sol lorsqu'une vitesse de déplacement de l'agencement d'entraînement est inférieure à un seuil prédéterminé, et facultativement, la machine de travail comprenant en outre un sélecteur de marche avant-point mort-marche arrière pour sélectionner un sens de marche voulu de la machine de travail, et le système de commande est configuré pour appliquer la première force de freinage à la structure de propulsion venant en prise avec le sol en réponse à une vitesse de déplacement de l'agencement d'entraînement inférieure à un seuil prédéterminé uniquement lorsque la machine de travail est en position point mort.

8. Machine de travail selon une quelconque revendication précédente, dans laquelle le système de freinage est un système de freinage hydraulique actionné par une pression de fluide hydraulique, et dans laquelle la pression de fluide hydraulique appliquée pour fournir la première force de freinage est proportionnelle à la vitesse de déplacement ou à la vitesse de rotation, déterminée, de l'agencement d'entraînement et, facultativement, le système de commande est configuré pour ajuster la pression de fluide hydraulique en commandant une position d'une vanne, par exemple une électrovanne, du système de freinage.

9. Machine de travail selon une quelconque revendication précédente, dans laquelle le système de freinage est un système de freinage hydraulique qui est actionné par une pression de fluide hydraulique et comprend au moins un servofrein hydraulique pour appliquer une force de freinage à la structure de propulsion venant en prise avec le sol.

10. Machine de travail selon une quelconque revendication précédente, dans laquelle le système de commande est configuré pour actionner le système de freinage de sorte que la machine de travail décélère à une vitesse prédéterminée et/ou l'amplitude de la première force de freinage est basée sur une ou plusieurs parmi : la vitesse de déplacement de la machine de travail ; une vitesse de rotation de l'agencement d'entraînement ; la masse de la machine ; une charge portée par la machine de travail ; et/ou la position du bras par rapport au corps.

11. Machine de travail selon une quelconque revendication précédente, dans laquelle le système de commande est configuré pour actionner le système de freinage de sorte que la première force de freinage appliquée augmente à mesure que la vitesse de déplacement de la machine de travail diminue et, facultativement, le système de commande est configuré pour actionner le système de freinage de sorte que la première force de freinage appliquée est inversement proportionnelle à la vitesse de déplacement de la machine de travail.

12. Machine de travail selon l'une quelconque des revendications 1 à 10, dans laquelle le système de commande est configuré pour actionner le système de freinage de sorte que la première force de freinage appliquée diminue à mesure que la vitesse de déplacement de la machine de travail diminue et, facultativement, le système de commande est configuré pour actionner le système de freinage de sorte que la première force de freinage appliquée est proportionnelle à la vitesse de déplacement de la machine de travail.

13. Machine de travail selon une quelconque revendication précédente,
dans laquelle le système de freinage est un système de freinage hydraulique actionné par une pression de fluide hydraulique et comprend une vanne à deux voies comprenant des première et seconde entrées agencées pour recevoir un fluide hydraulique associées aux première et seconde forces de freinage et une sortie pour transmettre le fluide hydraulique afin d'actionner le système de freinage.

14. Machine de travail selon une quelconque revendication précédente, comprenant un capteur d'inclinaison configuré pour déterminer une inclinaison de la machine de travail, dans laquelle le système de commande est configuré pour actionner le système de freinage afin d'appliquer la première force de freinage lorsqu'une inclinaison de la machine de travail est supérieure à un seuil d'inclinaison prédéterminé et que la vitesse de déplacement de la machine de travail est inférieure ou égale à un seuil de vitesse de déplacement prédéterminé.

15. Procédé de changement du sens de marche de la machine de travail selon une quelconque revendication précédente, le procédé comprenant les étapes de :
détermination quant à savoir si la vitesse de déplacement de la machine de travail est inférieure à un seuil prédéterminé et/ou si une vitesse de rotation de l'agencement d'entraînement est inférieure à un seuil prédéterminé ; et
application de la première force de freinage à la structure de propulsion venant en prise avec le sol par l'intermédiaire du système de freinage lorsque la vitesse de déplacement déterminée de la machine de travail est inférieure au seuil prédéterminé ou lorsque la vitesse de rotation déterminée de l'agencement d'entraînement est inférieure au seuil prédéterminé.
